# EUROPÄISCHE PATENTANMELDUNG

(11) **EP 2 837 473 A2**
(43) Veröffentlichungstag der Anmeldung: **18.02.2015**
(21) Anmeldenummer: 14176524.8
(22) Anmeldetag: 10.07.2014
(51) Int. Cl.: B25J 13/08, G05D 1/02

(54) **Projektionseinheit für eine selbsttätig mobile Plattform, Transportroboter und Verfahren zum Betrieb einer selbsttätig mobilen Plattform**

(30) Priorität: 06.08.2013 DE 102013215409
(71) Anmelder: ROBERT BOSCH GMBH, 70442 Stuttgart (DE)
(72) Erfinder: Fischer, Volker, 71229 Leonberg (DE); Linder, Stephanie, 70469 Stuttgart (DE); von Collani, Yorck, 71717 Beilstein (DE); Guenther, Clemens, 76275 Ettlingen (DE); Roesch, Ramona, 88447 Biberach-Warthausen (DE); Rohrer, Christoph, 70374 Stuttgart (DE); Suessemilch, Irene, 70569 Stuttgart (DE)

(57) **Zusammenfassung**

Eine Projektionseinheit (21) für eine selbsttätig mobile Plattform, insbesondere für einen frei beweglichen Transportroboter (20) und/oder für ein oder mehrere frei bewegliche Transporteinrichtungen eines Transportroboters, ist dadurch gekennzeichnet, dass die Projektionseinheit (21) für eine Signalgebung zur Projektion des Bewegungspfades (200, 300, 400) der mobilen Plattform eingerichtet ist, wobei die Projektion im räumlichen Umfeld der mobilen Plattform erfolgt.

## Beschreibung

Die vorliegende Erfindung betrifft eine Projektionseinheit für eine selbsttätig mobile Plattform, eine selbsttätig mobile Plattform und ein Verfahren zum Betrieb einer selbsttätig mobilen Plattform.

### Stand der Technik

In verschiedenen Bereichen kommen Transportroboter zum Einsatz. Beispielsweise in Krankenhäusern werden bereits autonome Transportroboter eingesetzt, die selbsttätig den Transport verschiedener Materialien oder Proben übernehmen. Die Roboter bewegen sich frei innerhalb der Räumlichkeiten, wie z.B. in Gängen, Fluren oder Aufzügen. Um eine Gefahr, die von dem frei beweglichen Transportroboter für die Personen im Umfeld des Transportroboters ausgeht, zu vermeiden, sind derartige Transportroboter beispielsweise mit Blinklichtern ausgestattet, die anzeigen, dass sich der Transportroboter in Bewegung befindet. Darüber hinaus sind Transportroboter in der Regel mit Sensoren, beispielsweise Lasersensoren, ausgestattet, die ein Hindernis detektieren können. Um Kollisionen insbesondere mit Personen zu vermeiden, ist es in der Regel aus Sicherheitsgründen vorgesehen, dass der Roboter im Zweifelsfall stehenbleibt, bis sich eine Person aus dem Fahrweg fortbewegt hat. Weiterhin kann eine Ausweichroute (Ausweichtrajektorie) um das Hindernis herum berechnet und befahren werden. Neben einem Einsatz in Krankenhäusern oder Pflegeheimen können derartige Transportroboter auch in vielen anderen Bereichen sinnvoll eingesetzt werden.

In industriellen Fertigungshallen werden ebenfalls Transportsysteme mit frei beweglichen Einheiten eingesetzt. Hierbei ist es oftmals vorgesehen, dass sich die frei beweglichen Einheiten auf festgelegten, markierten Pfaden bewegen. Anhand der Markierungen kann das Personal erkennen, welchen Weg das Transportsystem einschlagen wird und kann entsprechend darauf reagieren.

### Offenbarung der Erfindung

### Vorteile der Erfindung

Die vorliegende Erfindung schlägt eine Projektionseinheit für eine selbsttätig mobile Plattform vor, mit der der Betrieb der mobilen Plattform erheblich verbessert werden kann. Bei der selbsttätig mobilen Plattform handelt es sich beispielsweise um einen autonomen, frei beweglichen Transportroboter und/oder um ein oder mehrere frei bewegliche Transporteinrichtungen eines Transportroboters, wie sie beispielsweise in industriellen Fertigungsanlagen zum Einsatz kommen können. Die mobile Plattform kann darüber hinaus auch für andere Anwendungen, unabhängig von einem Transport, vorgesehen sein. Erfindungsgemäß ist die Projektionseinheit für eine Signalgebung zur Projektion des geplanten Bewegungspfades der mobilen Plattform eingerichtet. Die Projektion des Bewegungspfades erfolgt hierbei im räumlichen Umfeld der mobilen Plattform. Mit dieser Projektionseinheit kann der zukünftige geplante Bewegungspfad für die Personen im räumlichen Umfeld der mobilen Plattform erkennbar gemacht werden, wobei nicht nur der Bewegungspfad in der unmittelbaren Nähe der Plattform sondern auch der weitere Bewegungspfad angezeigt werden kann. Die Personen können auf diese Weise erkennen, in welche Richtung und auf welchem Pfad (Trajektorie) sich die mobile Plattform bewegen wird. Die Personen können daraufhin entsprechend reagieren, indem sie beispielsweise ausweichen. Auf diese Weise können Verunsicherungen und Akzeptanzprobleme bei den betroffenen Personen vermieden werden, da die selbsttätig mobile Plattform, also beispielsweise der frei bewegliche Transportroboter oder die frei bewegliche Transporteinrichtung, in ihren Bewegungen deutlich besser abschätzbar ist, sodass die Personen nicht mehr befürchten müssen, mit der mobilen Plattform zu kollidieren. Bisher war es aus Sicherheitsgründen erforderlich, dass ein Transportroboter im Zweifelsfall stehenbleiben muss, um Personen im Bereich des Fahrweges nicht zu gefährden. Durch die Projektion des Bewegungspfades ist es für die betroffenen Personen wesentlich einfacher, den Fahrweg der mobilen Plattform nicht zu kreuzen, sodass sich die mobile Plattform wesentlich ungehinderter auf ihrem Bewegungspfad bewegen kann, wodurch eine deutliche Zeitersparnis beim Betrieb der mobilen Plattform erreicht wird.

Mit dem Ausdruck "Projektionseinheit" ist allgemein eine Einheit gemeint, die zur Übertragung eines Signals in den Raum oder auf eine Fläche geeignet ist, insbesondere zur Übertragung eines optischen Signals aber auch beispielsweise eines akustischen Signals.

Zweckmäßigerweise ist die Projektionseinheit für eine optische Signalgebung eingerichtet, sodass durch optische Signale im räumlichen Umfeld der mobilen Plattform der Bewegungspfad angezeigt werden kann. Die optische Signalgebung kann darüber hinaus durch beispielsweise eine akustische Signalgebung ergänzt und unterstützt oder gegebenenfalls ersetzt werden.

Vorzugsweise erfolgt eine Projektion der Signale auf einem Fußboden und/oder an einer oder mehreren Wänden und/oder an einer Raumdecke im räumlichen Umfeld der mobilen Plattform. Die Projektion kann beispielsweise in Form einer virtuellen Transportbahn auf dem Boden erfolgen. Die virtuelle Transportbahn kann z.B. als mittige durchbrochene Linie oder als breites Band angezeigt werden. Vorzugsweise deutet die virtuelle Transportbahn auch die Breite oder Außenkontur der mobilen Plattform an. Es kann jedoch auch vorgesehen sein, dass die Anzeige, je nach den gegebenen Räumlichkeiten, an der Wand, beispielsweise in Augenhöhe einer Person und/oder an einer Decke erfolgt. Die verschiedenen Möglichkeiten können miteinander kombiniert werden, um die Sichtbarkeit und Erkennbarkeit für die betroffenen Personen zu optimieren.

Die virtuelle Transportbahn oder Transportschiene repräsentiert die Trajektorie, auf der sich die mobile Plattform bewegen wird. Anhand dieser virtuellen Schiene können Personen im Umfeld der mobilen Plattform sehr einfach erkennen, in welche Richtung sich die mobile Plattform bewegen wird und entsprechend darauf reagieren. Wenn die mobile Plattform wegen einer Person anhalten muss, kann die Projektionseinheit eine berechnete Ausweichtrajektorie projizieren und damit die Person auffordern, diesen Weg freizumachen bzw. nicht zu betreten.

In einer bevorzugten Ausgestaltung der erfindungsgemäßen Projektionseinheit wird der Bewegungspfad und insbesondere die virtuelle Transportbahn in aufgebrochener Weise dargestellt, beispielsweise in gestrichelter und/oder gepunkteter Form. Dies hat zum einen den Vorteil, dass im Vergleich mit einer durchgängigen Darstellung die erforderliche Energie für die Signalgebung deutlich reduziert wird, da nur ein Teil der Fahrspur beleuchtet wird. Zum anderen hat sich gezeigt, dass Personen unter Umständen eine Scheu haben, auf eine geschlossene Fläche, beispielsweise eine durchgezogene Markierung, zu treten. Durch die aufgebrochene Darstellung der virtuellen Transportbahn kann die Akzeptanz eines mit einer erfindungsgemäßen Projektionseinheit ausgestatteten Transportroboters bei den betroffenen Personen daher erhöht werden. Weiterhin wird mit der aufgebrochenen Projektion des Bewegungspfades in gewisser Weise eher ein Gebotscharakter dieser Projektion im Gegensatz zu einer Verbotslogik einer durchgängig angebrachten Trajektorienprojektion erreicht, wodurch die Akzeptanz bei den betroffenen Personen weiter erhöht werden kann.

Vorzugsweise kann die Projektion des Bewegungspfades durch Texte und/oder andere grafische Darstellungen, beispielsweise Symbole, ergänzt oder gegebenenfalls ersetzt werden. Durch projizierte Texte können weitere Hinweise oder Informationen an die Personen im räumlichen Umfeld der mobilen Plattform übermittelt werden. Das gleiche gilt für Symbole, über die eine einfache und international anwendbare Kommunikation mit den betroffenen Personen möglich ist.

Die Projektion des Bewegungspfades kann beispielsweise mit Laser oder mit herkömmlichem sichtbarem Licht erfolgen. Die Projektionseinheit umfasst daher vorteilhafterweise eine Laserprojektionseinheit, beispielsweise eine Mikro-Laserprojektionseinheit, und/oder eine Lichtprojektionseinheit zur Aussendung von sichtbarem Licht. Je nach Einsatzgebiet des Transportroboters können Laserstrahlen oder übliches sichtbares Licht bevorzugt sein. Eine Laserprojektion hat im Allgemeinen den Vorteil, dass besonders intensive Signale ausgesendet werden können. Da durch Laserstrahlen unter Umständen eine Sicherheitsgefahr für die Augen von betroffenen Personen ausgehen kann, kann es auch bevorzugt sein, sichtbares herkömmliches Licht zu verwenden.

In einer bevorzugten Ausgestaltung ist die Projektionseinheit weiterhin mit einer Sensoreinheit zur optischen Abstands- und/oder Bewegungsmessung im räumlichen Umfeld der mobilen Plattform ausgestattet. Die Sensoreinheit kann beispielsweise mit Laserstrahlen und/oder Funkwellen arbeiten. Durch diese Sensoreinheit können Hindernisse, beispielsweise Gegenstände oder Personen, detektiert werden, so dass der Transportroboter entsprechend reagieren kann. Beispielsweise kann bei der Detektion eines Hindernisses eine Ausweichtrajektorie, also eine Ausweichroute, berechnet werden. Diese Ausweichroute kann ebenfalls mittels der erfindungsgemäßen Projektionseinheit angezeigt werden, sodass die gegebenenfalls betroffene Person darüber informiert wird, dass der Transportroboter diese andere Route nehmen wird. Bei der Detektion eines Hindernisses auf dem geplanten Bewegungspfad der mobilen Plattform, beispielsweise einer Person, kann weiterhin ein akustisches Signal ausgegeben werden, beispielsweise ein geeigneter Hinweis durch einen Sprachcomputer.

Weiterhin kann die Signalgebung der Projektionseinheit so eingerichtet sein, dass bei der Detektion einer Person im Umfeld der mobilen Plattform die Signalgebung zumindest teilweise abschaltbar oder in ihrer Intensität verminderbar ist, um Störungen oder eine Gefährdung der Person durch den Lichtstrahl oder gegebenenfalls den Laserstrahl zu vermeiden. Weiterhin kann vorgesehen sein, dass die Projektion des Bewegungspfades auf installierte Infrastrukturmaßnahmen, beispielsweise Spiegel und/oder Reflektoren und/oder besondere Farbanstriche, zielt, die im räumlichen Umfeld der mobilen Plattform installiert sind. Hierdurch kann die Sichtbarkeit der Projektion für die betroffenen Personen weiter erhöht werden.

Vorteilhafterweise ist in die Projektionseinheit eine Kontrollrecheneinheit integriert und/oder der Projektionseinheit ist ein Kontrollrechner zugeordnet, wobei durch die Recheneinheit die Projektion gesteuert wird.

Die Erfindung umfasst weiterhin eine selbsttätig mobile Plattform, die wenigstens eine der bereits beschriebenen Projektionseinheiten umfasst. Bei der mobilen Plattform kann es sich beispielsweise um einen frei beweglichen Transportroboter und/oder um eine frei bewegliche Transporteinrichtung eines Transportroboters handeln. Die erfindungsgemäße mobile Plattform kann darüber hinaus auch für andere Anwendungen, unabhängig von einem Transport, vorgesehen sein. Bezüglich weiterer Merkmale der mobilen Plattform und insbesondere der Projektionseinheit wird auf die obige Beschreibung verwiesen.

Weiterhin umfasst die Erfindung ein Verfahren zum Betrieb einer selbsttätig mobilen Plattform, insbesondere eines autonomen, frei beweglichen Transportroboters und/oder einer oder mehrerer frei beweglicher Transporteinrichtungen eines Transportroboters, wobei der zukünftige geplante Bewegungspfad der selbsttätig mobilen Plattform im räumlichen Umfeld der mobilen Plattform projiziert wird. Erfindungsgemäß kann es weiterhin vorgesehen sein, dass im räumlichen Umfeld der mobilen Plattform eine optische Abstands- und/oder Bewegungsmessung vorgenommen wird, um Hindernisse, beispielsweise Gegenstände und insbesondere Personen, detektieren zu können. Eine entsprechende Sensoreinheit kann beispielsweise mit Laserstrahlen und/oder Funkwellen arbeiten. Wenn im Umfeld der selbsttätig mobilen Plattform eine Person oder ein anderes Hindernis detektiert wird, kann ein alternativer Bewegungspfad projiziert werden, sodass eine betroffene Person entsprechend informiert wird. Weiterhin kann es vorgesehen sein, dass bei der Detektion einer Person im Umfeld der mobilen Plattform die Projektion des Bewegungspfades zumindest teilweise abgeschaltet oder in ihrer Intensität vermindert wird, um Störungen oder Schädigungen bei einer betroffenen Person zu vermeiden.

Schließlich umfasst die Erfindung ein Computerprogramm, das alle Schritte des beschriebenen Verfahrens ausführt, wenn es auf einem Rechengerät oder einem Steuergerät, insbesondere einer Kontrollrecheneinheit der erfindungsgemäßen Projektionseinheit, ausgeführt wird, sowie ein entsprechendes Computerprogrammprodukt mit Programmcode, der auf einem maschinenlesbaren Träger gespeichert ist.

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

### Kurze Beschreibung der Zeichnungen

In den Zeichnungen zeigen:
- Fig. 1: schematische Darstellung eines Transportroboters mit Projektion des Bewegungspfades gemäß einer ersten Ausführungsform der Erfindung;
- Fig. 2: Aufsicht auf einen Transportroboter mit projiziertem Bewegungspfad innerhalb eines Ganges;
- Fig. 3: schematische Darstellung eines Transportroboters mit Projektion des Bewegungspfades gemäß einer weiteren Ausführungsform der Erfindung und
- Fig. 4: schematische Darstellung eines Transportroboters mit Projektion des Bewegungspfades gemäß einer weiteren Ausführungsform der Erfindung.

### Beschreibung von Ausführungsbeispielen

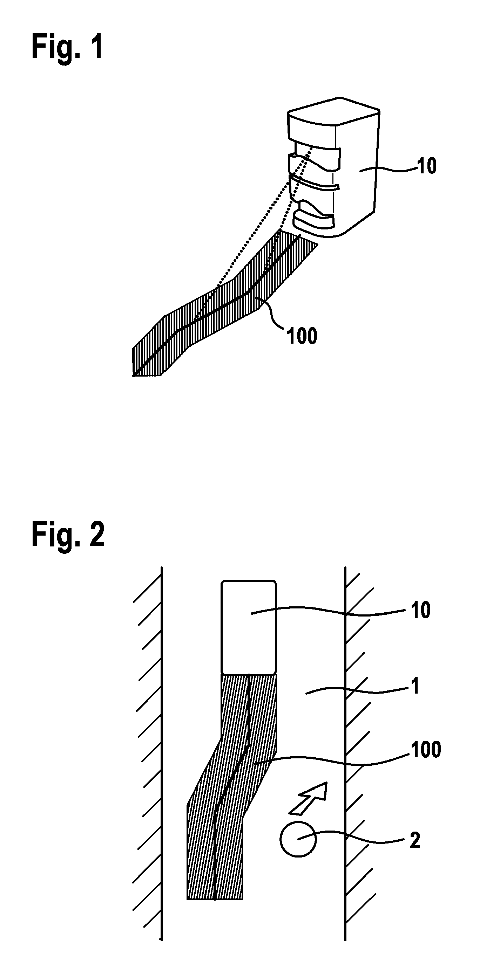

**Fig. 1** zeigt einen Transportroboter 10 als selbsttätig mobile Plattform, der im Raum frei beweglich ist. Der Transportroboter bzw. die mobile Plattform ist im Inneren mit einer Projektionseinheit (nicht im Einzelnen dargestellt) ausgestattet. Mittels der Projektionseinheit wird der geplante bzw. errechnete Bewegungspfad 100 auf den Untergrund optisch projiziert. Der Bewegungspfad 100 in Form einer virtuellen Transportschiene ist für die Personen im räumlichen Umfeld des Transportroboters 10 deutlich erkennbar. Die virtuelle Transportbahn 100 ist in dieser Ausgestaltung als Band in der Breite des Transportroboters 10 mit einem zentralen Streifen, der eine stärke Intensität als das übrige Band aufweist, ausgestaltet. Die virtuelle Transportschiene 100 zeigt den betroffenen Personen, auf welcher Bahn sich der Transportroboter 10 weiter bewegen wird, so dass die betroffenen Personen dieser Bewegungsbahn in Ruhe ausweichen können. Die zukünftigen Bewegungen des Transportroboters sind dadurch für die betroffenen Personen sehr gut vorhersehbar, so dass Unannehmlichkeiten, beispielsweise hektische Ausweichmanöver, vermieden werden und allgemein die Akzeptanz für selbsttätig fahrende Plattformen bzw. Transportroboter erhöht wird.

**Fig. 2** zeigt in schematischer Weise eine Aufsicht auf den Transportroboter 10 und die von der Projektionseinheit des Transportroboters 10 projizierte virtuelle Transportschiene 100, die eine Ausweichroute darstellt. Der Transportroboter 10 durchfährt in diesem Beispiel einen Gang 1, in dem sich eine Person 2 befindet. Der Transportroboter 10 umfasst eine Detektionseinheit, mit der durch eine opti-sche Abstands- und/oder Bewegungsmessung im räumlichen Umfeld des Transportroboters 10 ein Hindernis erfasst werden kann, in diesem Beispiel die Person 2. Diese Information wird bei der Errechnung der Trajektorie berücksichtigt. Eine Ausweichroute 100 wird berechnet und projiziert. Diese Ausweichroute 100 ist für die Person 2 sichtbar. Die Person 2 weiß daher, dass der Transportroboter 10 um sie herum fahren wird. Die Person 2 kann also entweder stehenbleiben oder sich in Pfeilrichtung weiterbewegen, um eine Kollision mit dem Transportroboter 10 sicher zu vermeiden.

In der Projektionseinheit kann beispielsweise eine an sich bekannte Mikro-Laserprojektionseinheit eingesetzt werden, die auf beliebigen Flächen ein scharfes Bild erzeugen kann. Für die Sensor- oder Detektionseinheit können beispielsweise LIDAR-Sensoren (LIDAR = Light detection and ranging) eingesetzt werden, die auf der Verwendung von Laserstrahlen basieren. Sowohl die Projektionseinheit als auch die Detektionseinheit für die Erfassung des Umfeldes können miteinander kombiniert und beide in einer Einheit zusammengefasst werden. Dies ist besonders vorteilhaft, da beide Systeme im Prinzip die gleiche Projektionstechnik einsetzen.

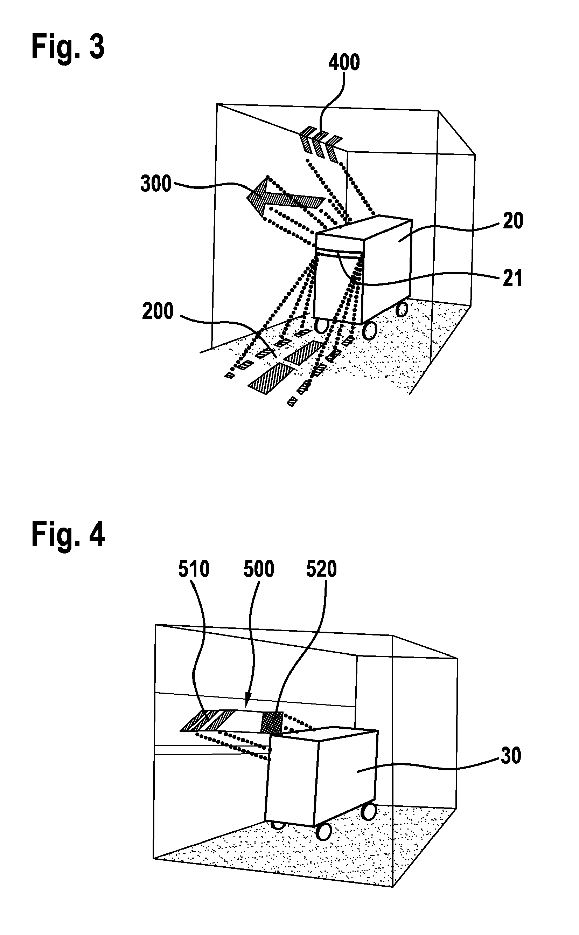

**Fig. 3** zeigt ein weiteres Beispiel für einen autonomen, frei beweglichen Transportroboter 20 als selbsttätig mobile Plattform. In dieser Ausgestaltung des Transportroboters 20 ist die Projektionseinheit 21 so realisiert, dass eine Projektion des Bewegungspfades 200 auf dem Fußboden, an der Wand (Pfeil 300) und an der Decke (Pfeile 400) erfolgt. Eine virtuelle Transportbahn 200 wird auf dem Fußboden durch mehrere durchbrochene Linien angezeigt. In diesem Beispiel werden eine mittlere Linie aus mehreren aufeinanderfolgenden breiten Streifen und zwei durchbrochene äußere dünnere Linien, die die Breite des Transportroboters 20 andeuten, projiziert. Der Pfeil 300 an der Wand zeigt in deutlicher Form die Richtung des Transportroboters 20 an. Das gleiche gilt für die hintereinander angeordneten Pfeile 400, die sich an der Decke im Bereich der Abwinklung der Wand befinden. Durch diese verschiedenen optischen Signale ist die geplante Trajektorie für eine Person im Umfeld des Transportroboters in sehr deutlicher Weise erkennbar. Diese Signale sind unabhängig von der jeweiligen Position einer Person in diesem Bereich nicht zu übersehen, so dass die Bewegungsrichtung und der Bewegungspfad für Personen in diesem Bereich deutlich zu erkennen sind, so dass die Personen entsprechend reagieren können. Allgemein erlauben die verschiedenen Projektionsmöglichkeiten der Erfindung verschiedene Varianten der Richtungsdarstellung, der Fahrtabsichten sowie weitere Aktivitätshinweise.

**Fig. 4** zeigt eine weitere Möglichkeit der erfindungsgemäßen Projektion zur Anzeige des Bewegungspfades des Transportroboters 30. In diesem Beispiel erfolgt die Projektion 500 an der Wand, seitlich von dem Transportroboter 30. Die Projektion 500 ist untergliedert in eine pfeilförmige Projektion 510, die die Bewegungsrichtung anzeigt. Weiterhin umfasst die Projektion 500 eine grafische Darstellung 520, die beispielsweise in Form von Piktogrammen oder Ähnlichem weitere Hinweise für Personen im Umfeld des Transportroboters 30 liefern kann.

Die verschiedenen Projektionen können auf vorinstallierte Infrastrukturmaßnahmen im Bewegungsumfeld des Transportroboters zielen. Beispielsweise sind Spiegel geeignet, die an schlecht einsehbaren Stellen eines Ganges angebracht sind. Alternativ können auch spezielle Wandbereiche als Reflektoren oder mit besonderen Farbanstrichen für die Projektion des Bewegungspfades genutzt werden, um die Wirkung der Projektion weiter zu unterstützen.

In diesen verschiedenen Ausgestaltungen der Erfindung können die verschiedenen Sehräume der beteiligten Personen im näheren Umfeld, beispielsweise bis zu einem Meter, sowie im entfernteren Umfeld, beispielsweise mehr als ein Meter, mit den nötigen Informationen versorgt werden. Die verschiedenen möglichen Variationen in der Projektionsdarstellung erlauben darüber hinaus, dass ein Aufenthalt von Personen im markierten Bereich möglich ist. Beispielsweise kann durch geeignete Texte, Symbole oder Piktogramme angezeigt werden, dass ein Aufenthalt in den markierten Bereichen ohne Gefahr möglich ist, je nach geplanter Trajektorie des Transportroboters. Für diese Möglichkeit ist es besonders bevorzugt, dass die virtuelle Fahrbahn nicht als durchgehende Fläche, sondern beispielsweise als gestrichelte Linie in der Projektion dargestellt ist, damit keine Hemmschwelle besteht, diesen Bereich zu betreten.

Die verschiedenen Variationen der Projektion ermöglichen es, dass auf die jeweiligen Nutzerbedürfnisse eingegangen werden kann. Beispielsweise können durch entsprechend großflächig gestaltete Pfeile an den Wänden die Bedürfnisse von in ihrer Sehkraft eingeschränkten Personen berücksichtigt werden.

Für die Projektionseinheit kann beispielsweise ein einzelner, in seiner Helligkeit nicht modulierbarer Laserstrahl eingesetzt werden, der mit einer entsprechenden Ablenkeinheit, beispielsweise einem Mikrospiegel, in gewünschter Weise positioniert werden kann. Hierbei lassen sich zwar keine komplexen Bilder auf die gewählte Projektionsfläche projizieren. Es ist jedoch möglich, beispielsweise einfache geschlossene Piktogramme zu projizieren. In einer weiteren Ausführungsform ist es möglich, dass der Laser zumindest an- und abgeschaltet werden kann, sodass sich ein einfaches, beispielsweise schwarz-weißes Bild oder ein entsprechendes Bild in der Farbe des jeweiligen Lasers auf der Projektionsfläche darstellen lässt. Aufgrund der Stärke des Lasers ist es auch bei ungünstigem Untergrund, z.B. auf einem dunklen Industrieteppich, möglich, eine entsprechende Darstellung bei Tageslicht zu erkennen.

Aus Sicherheitsgründen, insbesondere im Hinblick auf eine Schädigung der Augen durch einen Laserstrahl, ist es vorteilhaft, wenn die Projektionseinheit mit einer Detektionseinheit gekoppelt ist, die Personen im Umfeld des Transportroboters und insbesondere im Bereich des geplanten Bewegungspfades detektieren kann. Wenn eine Person detektiert wird, kann der Transportroboter stehenbleiben oder ausweichen. Weiterhin kann die Projektionseinheit ausgeschaltet oder in ihrer Leistung vermindert werden, wenn sich eine Person zu nahe an der Projektionseinheit befindet oder sich dieser nähert. Hierbei kann es vorgesehen sein, dass nur der Teil der Projektion ausgeschaltet oder gedimmt wird, der tatsächlich stören könnte.

Eine Alternative zu einem Laser in der Projektionseinheit bietet eine entsprechend leistungsstarke Lampe, die beispielsweise ergänzt durch eine Maske situationsangepasst die nötigen Fahrinformationen bzw. den Bewegungspfad darstellen kann. Verschiedene Masken können beispielsweise mechanisch über die Lampe geschoben werden, so dass der Lichtkegel der Lampe begrenzt und ausgelenkt wird und die Projektion entsprechend erfolgen kann. Weiterhin kann der Lichtkegel der Lampe durch eine Maske in eine spezifische Form zur Darstellung von bestimmten Symbolen gebracht werden. Auch in dieser Ausführungsform können mithilfe einer Lampe verschiedene Informationen im Hinblick auf den Bewegungspfad und allgemein auf die Trajektorie des Transportroboters an die Personen im Umfeld des Transportroboters übermittelt werden.

Die Projektionseinheit des Transportroboters kann einen sogenannten *Laser Lighting Display* enthalten oder mit einem solchen gekoppelt sein. Dieses Display projiziert den errechneten und geplanten Bewegungspfad auf dem Boden und/oder der übrigen Umgebung der mobilen Roboterplattform, beispielsweise in Form von durchbrochenen Linien, Pfeilen, Buchstaben oder Anderem. Weiterhin ist der Transportroboter mit einem Kontrollrechner, beispielsweise einem Computer ausgestattet, der dem *Laser Lighting Display* signalisiert, in welcher Form, beispielsweise bezogen auf das jeweilige Symbol und die Helligkeit, und wann die Projektion erfolgen soll. Das *Laser Lighting Display* und der Kontrollrechner sind beispielsweise im oberen Bereich oder auf einer mobilen Roboterplattform angebracht. Die Roboterplattform ist zusätzlich mit weiteren Komponenten, insbesondere einem Antrieb, Batterien, Sensorik usw. wie bei üblichen Transportrobotern ausgestattet. Im Allgemeinen verfügt der Kontrollrechner über Informationen zu dem momentanen Zustand der Roboterplattform, beispielsweise in Bezug auf die Position, die Fahrtrichtung, detektierte Menschen in der Umgebung usw.. Abgeleitet aus diesem Zustand wird ein situationsspezifisches Kommando für ein visuelles Signal von dem Kontrollrechner an das *Laser Lighting Display* geschickt. Das *Laser Lighting Display* projiziert das entsprechend spezifizierte Signal in das Umfeld der mobilen Roboterplattform, insbesondere in Richtung des geplanten Bewegungspfades. Dieses Signal ist für Personen im Umfeld des Transportroboters sichtbar, so dass diese Personen entsprechend reagieren können.

## Patentansprüche

1. Projektionseinheit (21) für eine selbsttätig mobile Plattform (10; 20; 30), **dadurch gekennzeichnet, dass** die Projektionseinheit (21) für eine Signalgebung zur Projektion des Bewegungspfades (100; 200; 300; 400; 500) der mobilen Plattform (10; 20; 30) eingerichtet ist, wobei die Projektion im räumlichen Umfeld der mobilen Plattform (10; 20; 30) erfolgt.

2. Projektionseinheit nach Anspruch 1, **dadurch gekennzeichnet, dass** die selbsttätig mobile Plattform (10; 20; 30) ein frei beweglicher Transportroboter und/oder ein oder mehrere frei bewegliche Transporteinrichtungen eines Transportroboters ist.

3. Projektionseinheit nach Anspruch 1 oder Anspruch 2, **dadurch gekennzeichnet, dass** die Projektionseinheit (21) für eine optische Signalgebung eingerichtet ist.

4. Projektionseinheit nach einem der vorhergehenden Ansprüche, **dadurch gekennzeichnet, dass** die Projektionseinheit (21) für eine Signalgebung zur Projektion von Signalen auf einem Fußboden (100; 200) und/oder an einer oder mehreren Wänden (300; 500) und/oder an einer Decke (400) eingerichtet ist.

5. Projektionseinheit nach einem der vorhergehenden Ansprüche, **dadurch gekennzeichnet, dass** die Projektion des Bewegungspfades (200; 300; 400; 500) in aufgebrochener Weise, insbesondere gestrichelt und/oder gepunktet, dargestellt ist.

6. Projektionseinheit nach einem der vorhergehenden Ansprüche, **dadurch gekennzeichnet, dass** die Projektion (500) Texte und/oder andere grafische Darstellungen, insbesondere Symbole, umfasst.

7. Projektionseinheit nach einem der vorhergehenden Ansprüche, **dadurch gekennzeichnet, dass** die Projektionseinheit (21) eine Laserprojektionseinheit, insbesondere eine Mikro-Laserprojektionseinheit, und/oder eine Lichtprojektionseinheit zur Aussendung von herkömmlichem sichtbarem Licht umfasst.

8. Projektionseinheit nach einem der vorhergehenden Ansprüche, **dadurch gekennzeichnet, dass** die selbsttätig mobile Plattform (10; 20; 30) wenigstens eine Sensoreinheit zur optischen Abstands- und/oder Bewegungsmessung im räumlichen Umfeld der mobilen Plattform umfasst, wobei vorzugsweise die Sensoreinheit mit Laserstrahlen und/oder Funkwellen arbeitet.

9. Projektionseinheit nach Anspruch 8, **dadurch gekennzeichnet, dass** in die Projektionseinheit (21) eine Kontrollrecheneinheit integriert ist und/oder dass der Projektionseinheit (21) ein Kontrollrechner zugeordnet ist.

10. Selbsttätig mobile Plattform (10; 20; 30), **dadurch gekennzeichnet, dass** die mobile Plattform wenigstens eine Projektionseinheit (21) gemäß einem der Ansprüche 1 bis 9 umfasst.

11. Verfahren zum Betrieb einer selbsttätig mobilen Plattform (10; 20; 30), insbesondere eines frei beweglichen Transportroboters und/oder einer oder mehrerer frei beweglicher Transporteinrichtungen eines Transportroboters, **dadurch gekennzeichnet, dass** der Bewegungspfad (100; 200; 300; 400; 500) der selbsttätig mobilen Plattform im räumlichen Umfeld der mobilen Plattform projiziert wird.

12. Verfahren nach Anspruch 11, **dadurch gekennzeichnet, dass** im räumlichen Umfeld der selbsttätig mobilen Plattform (10; 20; 30) eine optische Abstands- und/oder Bewegungsmessung vorgenommen wird.

13. Verfahren nach Anspruch 11 oder Anspruch 12, **dadurch gekennzeichnet, dass** bei einer Detektion einer Person (2) im räumlichen Umfeld der mobilen Plattform (10; 20; 30) ein alternativer Bewegungspfad der mobilen Plattform projiziert wird.

14. Verfahren nach einem der Ansprüche 11 bis 13, **dadurch gekennzeichnet, dass** bei der Detektion einer Person (2) im räumlichen Umfeld der mobilen Plattform (10; 20; 30) die Projektion des Bewegungspfades (100; 200; 300; 400; 500) zumindest teilweise abgeschaltet oder in ihrer Intensität vermindert wird.

15. Computerprogramm, das alle Schritte eines Verfahrens gemäß einem der Ansprüche 11 bis 14 ausführt, wenn es auf einem Rechengerät oder einem Steuergerät ausgeführt wird.

16. Computerprogrammprodukt mit Programmcode, der auf einem maschinenlesbaren Träger gespeichert ist, zur Durchführung eines Verfahrens gemäß einem der Ansprüche 11 bis 14, wenn das Programm auf einem Rechengerät oder einem Steuergerät ausgeführt wird.
